# EUROPÄISCHE PATENTANMELDUNG

(11) **EP 2 295 882 A2**
(43) Veröffentlichungstag der Anmeldung: **16.03.2011**
(21) Anmeldenummer: 10172038.1
(22) Anmeldetag: 05.08.2010
(51) Int. Cl.: F24F 13/14

(54) **Absperrklappe zum gasdichten Verschließen eines Lüftungskanals**

(30) Priorität: 10.08.2009 DE 102009028395
(71) Anmelder: YIT Germany GmbH, 80992 München (DE)
(72) Erfinder: Martinsteg, Dipl.-Ing., Hans, 52159 Roetgen (DE)
(74) Vertreter: Bauer, Dirk

(57) **Zusammenfassung**

Die Erfindung betrifft eine Absperrklappe (1) zum gasdichten Verschließen eines Lüftungskanals, mit einem Klappengehäuse (2) umfassend Wandabschnitte (5), die einen geschlossenen Gehäusemantel bilden, mit einem umlaufend abgedichteten mit dem Gehäusemantel verbundenen Klappenrahmen (6), mit einem beweglich in dem Klappengehäuse (2) gelagerten Klappenblatt (10), das von einer Öffnungsstellung, in der ein Strömungsquerschnitt von einem Eintrittsquerschnitt (17) des Klappengehäuses (2) durch den Klappenrahmen (6) hindurch zu einem Austrittsquerschnitt (18) des Klappengehäuses (2) besteht, in eine Schließstellung (11) überführbar ist, in der das Klappenblatt (10) unter Zwischenschaltung einer Dichtungseinrichtung (13) an dem Klappenrahmen (6) anliegt, und mit einem Gelenkhebelgetriebe (15), das einerseits mit dem Klappenblatt (10) verbunden und andererseits mit einer Antriebswelle (22) versehen ist, die aus dem Klappengehäuse (2) herausgeführt und mit einer Abtriebswelle eines Antriebs koppelbar ist. Um eine gasdichte Absperrklappe so weiter zu entwickeln, dass das Gelenkhebelgetriebe vor einer Einwirkung von zu großen Drehmomenten des Antriebs geschützt ist, ist gemäß der vorliegenden Erfindung eine Blockiereinrichtung (24) vorgesehen, mit der eine Weiterdrehung der Antriebswelle (22) über eine mit der Schließstellung (11) des Klappenblatts (10) korrespondierenden ersten Endstellung (32) hinaus und/oder über eine mit der Öffnungsstellung des Klappenblatts (10) korrespondierenden zweiten Endstellung hinaus so blockierbar ist, dass in der ersten und/oder der zweiten Endstellung (32) in die Antriebswelle (22) eingeleitete und eine Weiterdrehung anstrebende Drehmomente in das Klappengehäuse (2) oder ein anderes, außerhalb des Klappengehäuses (2) befindliches Bauteil ableitbar sind.

## Beschreibung

### Einleitung

Die Erfindung betrifft eine Absperrklappe zum gasdichten Verschließen eines Lüftungskanals mit einem Klappengehäuse umfassend Wandabschnitte, die einen geschlossenen Gehäusemantel bilden, mit einem umlaufend abgedichteten mit dem Gehäusemantel verbundenen Klappenrahmen, mit einem beweglich in dem Klappengehäuse gelagerten Klappenblatt, das von einer Öffnungsstellung, in der ein Strömungsquerschnitt von einem Eintrittsquerschnitt des Klappengehäuses durch den Klappenrahmen hindurch zu einem Austrittsquerschnitt des Klappengehäuses besteht, in eine Schließstellung überführbar ist, in der das Klappenblatt unter Zwischenschaltung einer Dichtungseinrichtung an dem Klappenrahmen anliegt, und mit einem Gelenkhebelgetriebe, das einerseits mit dem Klappenblatt verbunden und andererseits mit einer Antriebswelle versehen ist, die aus dem Klappengehäuse herausgeführt und mit einer Abtriebswelle eines Antriebs koppelbar ist, wobei das Klappenblatt eine kombinierte rotatorische und translatorische Bewegung vollführt.

### Stand der Technik

An Absperrklappen, die insbesondere in kernkrafttechnischen Anlagen eingebaut sind, werden hohe Dichtigkeitsanforderungen gestellt. Um diese Anforderungen zu erfüllen, schließt beispielsweise auch die gattungsgemäße Absperrklappe Typ GD-R der Firma caverion nach einer genau vorgegebenen Kinematik, bei der das Klappenblatt bei seiner Schließbewegung zunächst eine Schwenkbewegung um 90° erfährt und daraufhin zusätzlich mit einer Linearbewegung in eine Dichtung gepresst wird. Beim Öffnen wird das Klappenblatt entsprechend zunächst linear von der Dichtung wegbewegt und anschließend gedreht. Dies soll eine hohe Dichtigkeit und eine lange Lebensdauer der Dichtung garantieren, da die Dichtung nicht durch eine Scherbewegung belastet wird. Die Dichtigkeit der vorerwähnten Absperrklappe erfüllt bei fachgerechtem Einbau die Kriterien nach DIN 25414.

Aufgrund der Kombination von linearer Bewegung und Drehbewegung des Klappenblatts können für diesen Mechanismus lediglich Antriebe verwendet werden, die keine mechanische Blockierung aufweisen sondern durchdrehend sind. Die Abschaltfunktion des Antriebs beim Öffnen oder Schließen des Klappenblatts erfolgt durch weg- beziehungsweise drehmomentabhängige Endlagenschalter.

Gemäß den sicherheitstechnischen Regeln des Kerntechnischen Ausschusses (KTA) müssen in Kernkraftwerken eingebaute angetriebene Absperrklappen so dimensioniert sein, dass sie bei einem Versagen der Drehmomentbegrenzung einer Belastung aus dem von dem Antrieb eingeleiteten Drehmoment Stand halten.

Andererseits ist jedoch eine hohe Leistung des Antriebs erforderlich, um eine sichere Bewegung des oftmals großflächigen Klappenblatts zu gewährleisten. Hieraus ergibt sich wiederum die Schwierigkeit, dass es nahezu unmöglich ist, das Gelenkhebelgetriebe unter Beibehaltung seiner Funktion ausreichend tragfähig auszulegen.

### Aufgabe

Aus diesem Grund ist es Aufgabe der vorliegenden Erfindung, eine gasdichte Absperrklappe so weiter zu entwickeln, dass das Gelenkhebelgetriebe vor einer Einwirkung von zu großen Drehmomenten des Antriebs geschützt ist.

### Lösung

Ausgehend von der eingangs beschriebenen Absperrklappe ist zur Lösung der vorstehenden Aufgabe vorgesehen, die Absperrklappe mit einer Blockiereinrichtung zu versehen, mit der eine Weiterdrehung der Antriebswelle über eine mit der Schließstellung des Klappenblatts korrespondierenden ersten Endstellung hinaus und/oder über eine mit der Öffnungsstellung des Klappenblatts korrespondierenden zweiten Endstellung hinaus so blockierbar ist, dass in der ersten und/oder der zweiten Endstellung in die Antriebswelle eingeleitete und eine Weiterdrehung anstrebende Drehmomente vor einer Weiterleitung in das Klappengehäuse oder ein anderes, außerhalb des Klappengehäuses befindliches Bauteil ableitbar sind.

Zwar kann die Blockiereinrichtung derart ausgebildet sein, dass sie die Weiterdrehung der Antriebswelle nur über eine der beiden Endstellungen verhindert, jedoch ist es von Vorteil, wenn die Drehung der Antriebswelle sowohl über die erste als auch über die zweite Endstellung hinaus blockierbar ist. In diesem Fall erlaubt die Blockiereinrichtung lediglich eine Drehung der Antriebswelle um einen Winkel, der dem Winkel zwischen den beiden Endstellungen der Antriebswelle entspricht.

Bei ungestörtem Betrieb, das heißt, wenn der Endlagenschalter einwandfrei funktioniert und der Antrieb nach Überführung des Klappenblatts von seiner Schließstellung in die Öffnungsstellung - oder umgedreht - abgeschaltet wird, wird die Blockiereinrichtung nicht aktiv.

Für den Fall, dass der Endlagenschalter defekt ist, ist - nachdem das Gelenkhebelgetriebe und die Absperrklappe die jeweils gewünschte Bewegung abgeschlossen hat -- eine Drehung der Antriebswelle über die entsprechende Endstellung hinaus nicht möglich und das von der Abtriebswelle in die Antriebswelle eingeleitete Drehmoment wird nicht mehr auf das Gelenkhebelgetriebe sondern über die Blockiereinrichtung in angrenzende Bauteile übertragen, wobei ein Teil des Drehmoments wieder in die Abtriebswelle und somit zurück in den Antrieb eingeleitet wird. Sollte der Antrieb hierbei Schaden nehmen, ist dieser typischerweise außerhalb von kontaminierten Bereichen angeordnet, so dass er ohne erhöhten Aufwand repariert oder ausgetauscht werden kann. Wichtig ist, dass die Absperrklappe als solche, die sich in den kontaminierten Bereichen befindet, einwandfrei und zuverlässig betätigbar ist und bei einem eventuellen Defekt des Endlagenschalters keinen Schaden nimmt.

Eine vorteilhafte Weiterbildung der erfindungsgemäßen Absperrklappe sieht vor, dass die Blockiereinrichtung ein drehmomentfest an der Antriebswelle befestigtes Blockierelement und ein mittelbar oder unmittelbar mit dem Klappengehäuse verbundenes Anschlagelement aufweist, wobei Blockierelement und Anschlagelement in mindestens einer Endstellung blockierend zusammenwirken. Dabei können zur Blockierung einer Weiterdrehung über beide Endstellungen hinaus auch zwei Blockierelemente mit zwei entsprechend angeordneten Anschlagelementen zusammenwirken oder aber die Blockiereinrichtung umfasst ein Blockierelement, das bei einer Drehung über die beiden Endstellungen hinaus an zwei den Endstellungen zugeordnete Anschlagelemente stößt.

Da das Blockierelement drehmomentfest mit der Antriebswelle verbunden ist, bewegt sich erstgenanntes synchron mit der Antriebswelle und stößt im Fall eines Defekts des Endlagenschalters an das Anschlagelement. Bei ordnungsgemäßer Funktion des Endlagenschalters dreht sich die Antriebswelle lediglich bis in ihre Endstellungen, was bedeutet, dass das Blockierelement noch gerade nicht an das Anschlagelement gerät. Erst wenn der Endlagenschalter den Antrieb nicht abschaltet, schlägt das Blockierelement an das Anschlagelement an und verhindert eine Weiterdrehung der Antriebswelle. Demnach verbleibt bei ungestörtem Betrieb der Absperrklappe in den beiden Endstellungen immer ein kleiner Spalt zwischen dem Blockierelement und dem Anschlagelement, was insbesondere für die Vermeidung einer Doppelpassung im Hinblick auf die Anlage des Klappenblatts an die umlaufende Dichtung wichtig ist.

Vorteilhafterweise weist das Anschlagelement einen Anschlagbolzen auf, der mit einem Gewindeabschnitt in eine Gewindebohrung in das Klappengehäuse oder einen damit verbundenen, die Antriebswelle lagernden Lagerkörper einschraubbar ist. Eine auf das Anschlagelement ausgeübte Kraft wird folglich über den Anschlagbolzen direkt oder indirekt (über den Lagerkörper) in das Klappengehäuse eingeleitet, wodurch die Antriebswelle und das Gelenkhebelgetriebe geschont werden.

Umfasst das Klappengehäuse einen vorerwähnten Lagerkörper, so ist es ferner von Vorteil, wenn der Lagerkörper eine Lagerbohrung besitzt, durch die die Antriebswelle drehbar und gasdicht abgedichtet durch das Klappengehäuse nach außen geführt ist, wobei der Lagerkörper umlaufend gasdicht mit dem Klappengehäuse verschweißt ist.

Gemäß einer vorteilhaften Ausgestaltung der Erfindung ist das Blockierelement eine Blockierscheibe, die mindestens ein Blockiersegment mit mindestens einer Blockierfläche besitzt, die mit den Anschlagelementen zusammenwirkt, wobei die Blockierscheibe einen Nabenbereich besitzt, der drehmomentfest mit der Antriebswelle gekoppelt ist.

Ferner ist es von Vorteil, wenn die Antriebswelle in einem Endabschnitt einen Vielkantquerschnitt, vorzugsweise einen Sechskantquerschnitt, aufweist und das Blockierelement, vorzugsweise die Blockierscheibe, eine angepasste Ausnehmung mit einem Vielkantquerschnitt, vorzugsweise einem Sechskantquerschnitt, ist. Somit ist das Blockierelement auf einfache Weise und werkzeuglos mit der Antriebswelle koppelbar, wobei diese Verbindung sowohl kraftschlüssig als auch formschlüssig ist.

Darüber hinaus besitzt der Lagerkörper gemäß einer vorteilhaften Weiterbildung der erfindungsgemäßen Absperrklappe an einer dem Klappengehäuse abgewandten Stirnfläche eine Ausnehmung, in der das Blockierelement zusammen mit der Antriebswelle drehbar ist und in der das mindestens eine Anschlagelement angeordnet ist.

Eine besonders vorteilhafte Ausbildung der Erfindung sieht ein Blockierelement mit zwei bei entgegen gesetzten Drehrichtungen der Antriebswelle wirksamen Blockierflächen vor, die mit zwei entgegen gesetzten Anschlagflächen desselben Anschlagelements zusammenwirken. Auf diese Weise wird die Antriebswelle mit lediglich einem Blockierelement und einem Anschlagelement gegen eine Drehung sowohl über die erste als auch über die zweite Endstellung hinaus blockierbar.

### Ausführungsbeispiel

Die Erfindung wird nachfolgend anhand von einem Ausführungsbeispiel näher erläutert, das in den Figuren dargestellt ist.

Es zeigt:
- Figur 1: eine Ansicht auf eine erfindungsgemäße Absperrklappe,
- Figur 2: einen Vertikalschnitt durch die Absperrklappe aus Figur 1,
- Figur 3: eine Draufsicht auf die Blockiereinrichtung aus Figur 1 und
- Figur 4: einen Schnitt durch die Blockiereinrichtung aus Figur 3.

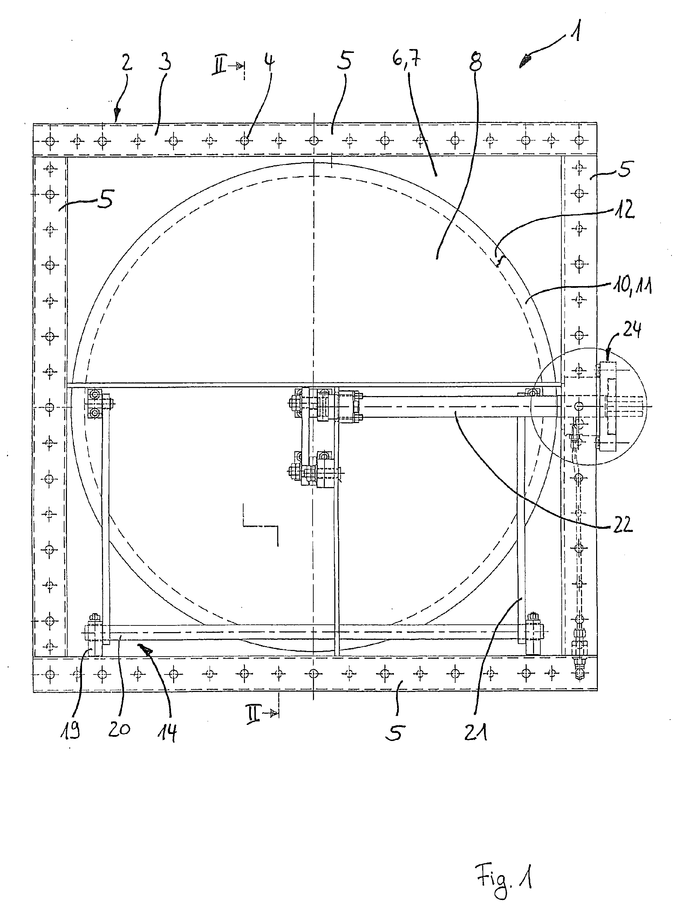

In der Figur 1 ist eine erfindungsgemäße Absperrklappe 1 zum gasdichten Verschließen eines Lüftungskanals in einer Ansicht dargestellt. Die Absperrklappe 1 umfasst ein Klappengehäuse 2 mit einem Gehäuseflansch 3, der zum Anschluss an einen nicht in der Figur gezeigten Lüftungskanal dient und zu diesem Zwecke mit einer Vielzahl von Bohrungen 4 versehen ist. Das Klappengehäuse 2 besteht aus vier Wandabschnitten 5, die einen geschlossenen Gehäusemantel bilden.

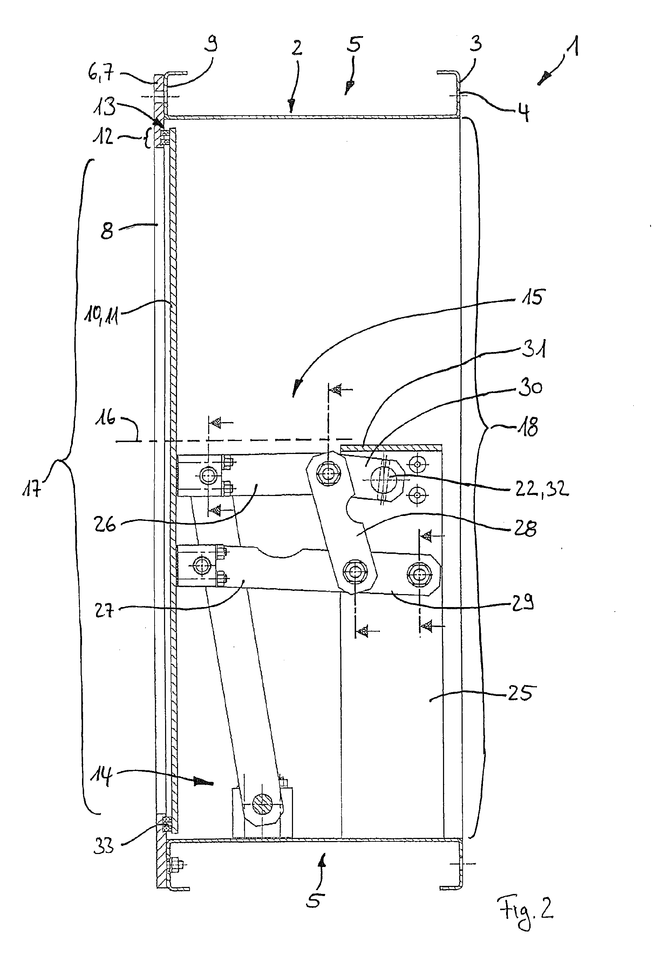

Die Absperrklappe 1 umfasst des Weiteren einen Klappenrahmen 6 in Form einer rechteckigen Platte 7, die in ihrer Mitte ein rundes Loch 8 besitzt. Der Klappenrahmen 6 ist umlaufend mit einem weiteren Flansch 9 des Klappengehäuses 2 verbunden und gegenüber diesem abgedichtet. Das Loch 8 in dem Klappenrahmen 6 wird von einem ebenfalls rundem Klappenblatt 10 in seiner Schließstellung 11 verschlossen, das einen größeren Durchmesser besitzt als das Loch 8, so dass das Klappenblatt 10 innerhalb eines Überlappungsbereiches 12 und unter Zwischenschaltung einer Dichtungseinrichtung 13 (Figur 2) gegen den Klappenrahmen 6 anliegt. Das Loch 8 in dem Klappenrahmen 6 und das Klappenblatt 10 können ebenfalls oval oder elliptisch ausgebildet sein.

Das Klappenblatt 10 ist beweglich auf einer Lagereinrichtung 14 gelagert und kann mittels eines Gelenkhebelgetriebes 15 von seiner Schließstellung 11, in der es sich umlaufend gegen den Klappenrahmen 6 abstützt, in eine durch eine gestrichelte Linie 16 in der Figur 2 angedeutete Öffnungsstellung überführt werden, in der das Klappenblatt 10 um etwa 90° gedreht ist und in den Öffnungsquerschnitt des Lochs 8 des Klappenrahmens 6 hineinragt. Auf diese Weise wird ein Strömungsquerschnitt zwischen einem Eintrittsquerschnitt 17 des Klappengehäuses 2 durch den Klappenrahmen 6 hindurch zu einem Austrittsquerschnitt 18 des Klappengehäuses 2 freigegeben.

Die Lagereinrichtung 14 setzt sich aus einer in zwei Lagerböcken 19 gelagerten Lagerwelle 20 am Fuße des Klappengehäuses 2 und zwei drehgelenkig damit verbundenen Stützstreben 21 zusammen, die ausgehend von der Lagerwellen 20 bis zu der halben Höhe des Klappenblatts 10 reichen und dort jeweils am äußeren Rand des Klappenblatts 10 gelenkig befestigt sind und dieses stabilisieren. Die Lagereinrichtung 14 erlaubt aufgrund ihrer gelenkigen Auflagerpunkte sowohl eine lineare Bewegung des Klappenblatts 10 in horizontale Richtung als auch eine Drehbewegung des Klappenblatts 10 um eine horizontale, parallel zu dem Klappenblatt 10 verlaufende Drehachse.

Das innerhalb des Klappengehäuses 2 angeordnete Gelenkhebelgetriebe 15 ist an zwei Punkten mit dem Klappenblatt 10 verbunden (siehe Figur 2) und darüber hinaus mit einer Antriebswelle 22 versehen, die in horizontaler Richtung verläuft und an einer Seite der Absperrklappe 1 drehbar und gasdicht abgedichtet durch einen Wandabschnitt 5 hindurchgeführt ist.

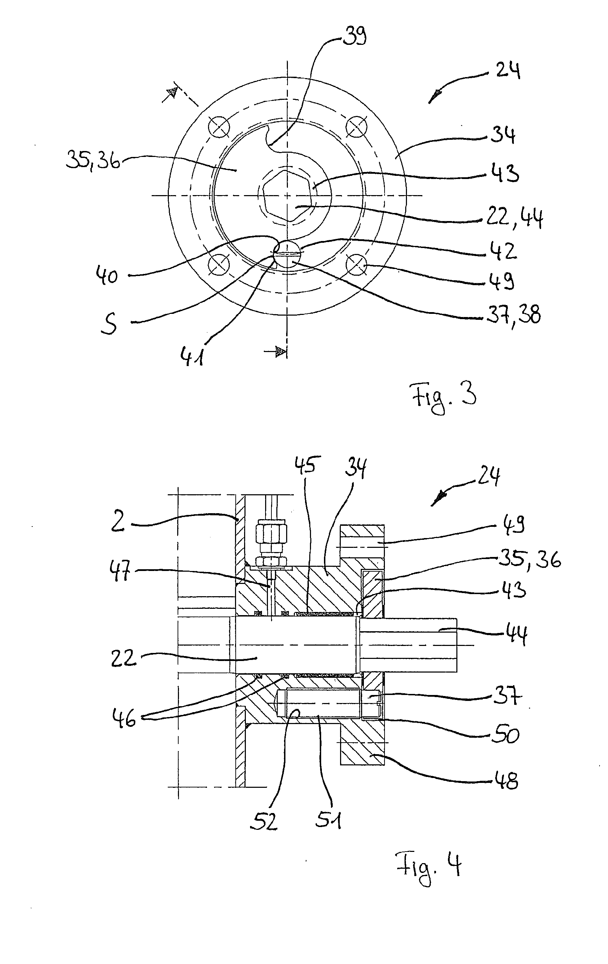

Außerhalb des Klappengehäuses 2 ist die Antriebswelle 22 mit einer nicht dargestellten Abtriebswelle eines ebenfalls nicht dargestellten Antriebs gekoppelt. Im Endbereich der Antriebswelle 22 ist eine Blockiereinrichtung 24 angeordnet, die im Zusammenhang mit den Figuren 3 und 4 näher erläutert wird.

Die Figur 2 zeigt einen Vertikalschnitt durch die erfindungsgemäße Absperrklappe 1 aus Figur 1, aus der der Aufbau des Gelenkhebelgetriebes 15 deutlich wird. Das Gelenkhebelgetriebe 15 sitzt auf einer Stützstrebe 25 und umfasst zwei in der Figur 2 dargestellten Position parallel zueinander ausgerichtete Schwinghebel 26, 27, die jeweils an einem Ende drehgelenkig mit dem Klappenblatt 10 verbunden sind. An ihren Enden sind die beiden Schwinghebel 26, 27 über eine Koppel 28 miteinander verbunden, die wiederum an einem Ende über einen Arm 29 mit der Stützstrebe 25 verbunden ist und am anderen Ende mit einer Kurbel 30, die von der Antriebswelle 22 gedreht wird.

Zum Öffnen des Klappenblatts 10 wird die Kurbel 30 mittels der Antriebswelle 22 um etwa 180° gegen den Uhrzeigersinn gedreht, so dass die Schwinghebel 26, 27 entsprechen bewegt werden und das Klappenblatt 10 in eine horizontale Stellung (Öffnungsstellung) zu liegen kommt, wobei sie teilweise in den Innenraum der Absperrklappe 1 hineinragt. Die Öffnungsstellung ist mittels einer gestrichelten Linie 16 in der Figur 2 angedeutet, wobei das Klappenblatt 10 auf einem horizontal verlaufenden und an beiden Seiten mit dem Klappengehäuse 2 verbundenen Stahlblech 31 zu liegen kommt. Sobald die Kurbel 30 ihre um etwa 180° gedrehte Position erreicht hat, wird der nicht dargestellte Antrieb mittels eines ebenfalls nicht dargestellten Endlagenschalters abgeschaltet, so dass die Antriebswelle 22 und somit auch die Kurbel 30 nicht weiter gedreht wird. Wird die Absperrklappe 1 wieder geschlossen, so treibt der Antrieb die Antriebswelle 22 in umgekehrter Richtung (im Uhrzeigersinn) an, so dass die damit verbundene Kurbel 30 die Schwinghebel 26, 27 wieder in die in der Figur 2 dargestellte Stellung bewegt. Die Stellung der Antriebswelle 22, die zu der Schließstellung 11 des Klappenblatts 10 korrespondiert, wird als erste Endstellung 32 verstanden. Auch nach Erreichen der Schließstellung 11 wird der Antrieb über den Endlagenschalter ausgeschaltet, so dass eine Weiterdrehung der Antriebswelle 22 über die erste Endstellung 32 hinaus nicht erfolgt. Die zu der Öffnungsstellung korrespondierende Stellung der Antriebswelle 22, in der die Kurbel 30 gegenüber der in der Figur 2 gezeigten Stellung um etwa 180° gegen den Uhrzeigersinn gedreht ist, wird im Rahmen dieser Anmeldung als zweite Endstellung verstanden.

In der Figur 2 ist ebenfalls erkennbar, dass die Dichtungseinrichtung 13 zwischen Klappenblatt 10 und Klappenrahmen 6 eine Prüfrille 33 umfasst, mit der die zulässige Leckrate des Klappensitzes prüfbar ist.

In der Figur 3 ist die Blockiereinrichtung 24 aus Figur 1 in einer Draufsicht gezeigt. Die Blockiereinrichtung 24 umfasst einen im Querschnitt runden Lagerkörper 34, in dem ein Blockierelement 35 in Form einer Blockierscheibe 36 und ein Anschlagelement 37 in Form eines Anschlagbolzens 38 untergebracht sind. Die Blockierscheibe 36 besitzt zwei Blockierflächen 39, 40, die in den beiden entgegen gesetzten Drehrichtungen der Antriebswelle 22 wirksam sind und folglich mit zwei entgegen gesetzten Anschlagflächen 41, 42 des Anschlagbolzens 38 zusammenwirken.

Innerhalb einer Lagerbohrung 43 in dem Lagerkörper 34 ist die Antriebswelle 22, die einen Endabschnitt 44 mit einem Sechskantquerschnitt besitzt, drehbar gelagert, wobei die Blockierscheibe 36 mit einem Nabenbereich drehmomentfest mit der Antriebswelle 22 verbunden ist und sich somit synchron mit dieser mitdreht. Das Anschlagelement 37 ist wiederum fest und unbeweglich mit dem Lagerkörper 34 verbunden. In der Figur 3 ist die Blockiereinrichtung 24 in der Öffnungsstellung der Absperrklappe 1 gezeigt, in der die zu der zweiten Endstellung der Antriebswelle 22 korrespondierende Blockierfläche 40 noch nicht an das Anschlagelement 37 anschlägt, sondern ein geringer Spalt S zwischen Blockierfläche 40 und Anschlagelement 37 verbleibt. Erst bei einer Weiterdrehung der Antriebswelle 22 über die zweite Endstellung hinaus schlägt die Blockierfläche 40 an die Anschlagfläche 41 des Anschlagelements 37.

Dass sowohl in der ersten Endstellung 32 als auch in der zweiten Endstellung ein Spalt S zwischen den Blockierflächen 39, 40 und dem Anschlagelement 37 verbleibt, ist insbesondere zur Vermeidung einer Doppelpassung wichtig, so dass bei normalem Betrieb der Absperrklappe 1 in der Schließstellung 11 eine dichte und gleichmäßige Anlage des Klappenblatts 10 an der Dichtungseinrichtung 13 gewährleistet ist.

Wird die Antriebswelle 22 ausgehend von der in der Figur 3 gezeigten Stellung im Uhrzeigersinn gedreht, so wird die Blockierscheibe 36 mitgedreht, bis die zu der ersten Endstellung 32 der Antriebswelle 22 korrespondierende Blockierfläche 39 bis kurz vor das Anschlagelement 37 gelangt.

Bei defektem Endlagenschalter ist eine Drehung der Antriebswelle 22 über die erste Endstellung 32 oder zweite Endstellung hinaus demnach nicht möglich und das Gelenkhebelgetriebe 15 ist vor einer zu hohen Drehmomentenbelastung aus einem nicht abgeschalteten Antrieb geschützt.

Aus dem Schnitt durch die Blockiereinrichtung 24 aus Figur 3, der in der Figur 4 dargestellt ist, ist erkennbar, dass der Lagerkörper 34 umlaufend mit dem Klappengehäuse 2 verschweißt ist und eine Lagerbohrung 43 besitzt, durch die die Antriebswelle 22 sowie ihr im Querschnitt sechskantförmig ausgebildeter Endabschnitt 44 drehbar und gasdicht abgedichtet durch das Klappengehäuse 2 geführt ist. Die Antriebswelle 22 ist vor ihrem sechskantförmigen Endabschnitt 44 von einer Lagerbuchse 45 und zwei umlaufenden Dichtungen 46, die in einem Abstand zueinander verlaufen, umgeben, wobei im Bereich zwischen den beiden Dichtungen eine Prüfbohrung 47 angeordnet ist, anhand der die Dichtigkeit zwischen Antriebswelle 22 und Lagerkörper 34 prüfbar beziehungsweise auch kontinuierlich prüfbar ist.

Der Lagerkörper 34 weist an seiner dem Klappengehäuse 2 abgewandten Seite einen Flansch 48 zur Kopplung des Antriebs auf, wobei der Flansch 48 mit vier Bohrungen 49 zur Durchführung von nicht in der Figur dargestellten Befestigungsschrauben des Antriebs versehen ist.

Des Weiteren besitzt der Lagerkörper 34 an seiner dem Klappengehäuse 2 abgewandten Seite eine Ausnehmung 50, in der die Blockierscheibe 36, die mit dem Endabschnitt 44 der Antriebswelle 22 drehmomentfest verbunden ist, angeordnet ist. Bei einer Drehung der Antriebswelle 22 wird die Blockierscheibe 36 über den Endabschnitt 44 mitgedreht, wobei eine Drehung der Antriebswelle 22 über die erste Endstellung 32 oder zweite Endstellung hinaus nicht möglich ist, da dann die Blockierflächen 39, 40 an die Anschlagflächen 41, 42 des Anschlagelements 37 stoßen. Das als Anschlagbolzen 38 ausgebildete Anschlagelement 37 besitzt einen Gewindeabschnitt 51, der in eine Gewindebohrung 52 in dem Lagerkörper 34 eingeschraubt ist, wobei der Anschlagbolzen 38 mit seinem Kopf in die Ausnehmung 50 ragt.

Für den Fall, dass der Endlagenschalter defekt ist, stößt bei eingeschaltetem Antrieb das Blockierelement 35 an das Anschlagelement 37 und das von der Abtriebswelle des Antriebs eingeleitete Drehmoment wird von dem Endabschnitt 44 der Antriebswelle 22 über das Blockierelement 35 in das Anschlagelement 37 und von dort in das Klappengehäuse 2 abgeleitet.

In den Figuren sind
- 1: Absperrklappe
- 2: Klappengehäuse
- 3: Gehäuseflansch
- 4: Bohrung
- 5: Wandabschnitt
- 6: Klappenrahmen
- 7: Rechteckige Platte
- 8: Loch
- 9: Flansch
- 10: Klappenblatt
- 11: Schließstellung
- 12: Überlappungsbereich
- 13: Dichtungseinrichtung
- 14: Lagereinrichtung
- 15: Gelenkhebelgetriebe
- 16: Gestrichelte Linie
- 17: Eintrittsquerschnitt
- 18: Austrittsquerschnitt
- 19: Lagebock
- 20: Lagerwelle
- 21: Stützstreben
- 22: Antriebswelle
- 24: Blockiereinrichtung
- 25: Stützstrebe
- 26: Schwinghebel
- 27: Schwinghebel
- 28: Koppel
- 29: Arm
- 30: Kurbel
- 31: Stahlblech
- 32: Erste Endstellung
- 33: Prüfrille
- 34: Lagerkörper
- 35: Blockierelement
- 36: Blockierscheibe
- 37: Anschlagelement
- 38: Anschlagbolzen
- 39: Blockierfläche
- 40: Blockierfläche
- 41: Anschlagfläche
- 42: Anschlagfläche
- 43: Lagerbohrung
- 44: Endabschnitt
- 45: Lagerbuchse
- 46: Dichtung
- 47: Prüfbohrung
- 48: Flansch
- 49: Bohrung
- 50: Ausnehmung
- 51: Gewindeabschnitt
- 52: Gewindebohrung
- S: Spalt

## Patentansprüche

1. Absperrklappe (1) zum gasdichten Verschließen eines Lüftungskanals,
- mit einem Klappengehäuse (2) umfassend Wandabschnitte (5), die einen geschlossenen Gehäusemantel bilden,
- mit einem umlaufend abgedichteten mit dem Gehäusemantel verbundenen Klappenrahmen (6),
- mit einem beweglich in dem Klappengehäuse (2) gelagerten Klappenblatt (10), das von einer Öffnungsstellung, in der ein Strömungsquerschnitt von einem Eintrittsquerschnitt (17) des Klappengehäuses (2) durch den Klappenrahmen (6) hindurch zu einem Austrittsquerschnitt (18) des Klappengehäuses (2) besteht, in eine Schließstellung (11) überführbar ist, in der das Klappenblatt (10) unter Zwischenschaltung einer Dichtungseinrichtung (13) an dem Klappenrahmen (6) anliegt, und
- mit einem Gelenkhebelgetriebe (15), das einerseits mit dem Klappenblatt (10) verbunden und andererseits mit einer Antriebswelle (22) versehen ist, die aus dem Klappengehäuse (2) herausgeführt und mit einer Abtriebswelle eines Antriebs koppelbar ist, wobei das Klappenblatt (10) eine kombinierte rotatorische und translatorische Bewegung vollführt,
**gekennzeichnet durch** eine Blockiereinrichtung (24), mit der eine Weiterdrehung der Antriebswelle (22) über eine mit der Schließstellung (11) des Klappenblatts (10) korrespondierenden ersten Endstellung (32) hinaus und/oder über eine mit der Öffnungsstellung des Klappenblatts (10) korrespondierenden zweiten Endstellung hinaus so blockierbar ist, dass in der ersten und/oder der zweiten Endstellung (32) in die Antriebswelle (22) eingeleitete und eine Weiterdrehung anstrebende Drehmomente vor einer Weiterleitung in das Gelenkhebelgetriebe (15) in das Klappengehäuse (2) oder ein anderes, außerhalb des Klappengehäuses (2) befindliches Bauteil ableitbar sind.

2. Absperrklappe nach Anspruch 1, **dadurch gekennzeichnet, dass** die Blockiereinrichtung (24) mindestens ein drehmomentfest an der Antriebswelle (22) befestigtes Blockierelement (35) und mindestens ein mittelbar oder unmittelbar mit dem Klappengehäuse (2) verbundenes Anschlagelement (37) aufweist, wobei Blockierelement (35) und Anschlagelement (37) in mindestens einer Endstellung (32) blockierend zusammenwirken.

3. Absperrklappe nach Anspruch 2, **dadurch gekennzeichnet, dass** das mindestens eine Anschlagelement (37) einen Anschlagbolzen (38) aufweist, der mit einem Gewindeabschnitt (51) in eine Gewindebohrung (52) in das Klappengehäuse (2) oder einen damit verbundenen, die Antriebswelle (22) lagernden Lagerkörper (34) einschraubbar ist.

4. Absperrklappe nach Anspruch 3, **dadurch gekennzeichnet, dass** der Lagerkörper (34) eine Lagerbohrung (43) besitzt, durch die die Antriebswelle (22) drehbar und gasdicht abgedichtet durch das Klappengehäuse (2) nach außen geführt ist, wobei der Lagerkörper (34) umlaufend gasdicht mit dem Klappengehäuse (2) verschweißt ist.

5. Absperrklappe nach einem der Ansprüche 2 bis 4, **dadurch gekennzeichnet, dass** das Blockierelement (35) eine Blockierscheibe (36) ist, die mindestens ein Blockiersegment mit mindestens einer Blockierfläche (39) besitzt, die mit den Anschlagelementen (37) zusammenwirkt, wobei die Blockierscheibe (36) einen Nabenbereich besitzt, der drehmomentfest mit der Antriebswelle (22) gekoppelt ist.

6. Absperrklappe nach einem der Ansprüche 1 bis 5, **dadurch gekennzeichnet, dass** die Antriebswelle (22) in einem Endabschnitt (44) einen Vielkantquerschnitt, vorzugsweise einen Sechskantquerschnitt aufweist und das Blockierelement (35), vorzugsweise die Blockierscheibe (36) eine angepasste Ausnehmung mit einem Vielkantquerschnitt, vorzugsweise einem Sechskantquerschnitt, ist.

7. Absperrklappe nach einem der Ansprüche 3 bis 6, **dadurch gekennzeichnet, dass** der Lagerkörper (34) an einer dem Klappengehäuse (2) abgewandten Stirnfläche eine Ausnehmung (50) besitzt, in der das Blockierelement (35) zusammen mit der Antriebswelle (22) drehbar ist und in der das mindestens eine Anschlagelement (37) angeordnet ist.

8. Absperrklappe nach einem der Ansprüche 1 bis 7, **dadurch gekennzeichnet, dass** ein Blockierelement (35) mit zwei bei entgegen gesetzten Drehrichtungen der Antriebswelle (22) wirksamen Blockierflächen (39, 40) versehen ist, die mit zwei entgegen gesetzten Anschlagflächen (41, 42) desselben Anschlagelements (37) zusammenwirken.
